Europäisches Patentamt

European Patent Office

Office européen des brevets

(19)

(11) Veröffentlichungsnummer: **0 358 932**

**A2**

## (12) EUROPÄISCHE PATENTANMELDUNG

(21) Anmeldenummer: **89114501.3**

(22) Anmeldetag: **05.08.89**

(51) Int. Cl.5: **B60S 3/04**

(30) Priorität: **10.09.88 DE 3830910**

(43) Veröffentlichungstag der Anmeldung:
**21.03.90 Patentblatt 90/12**

(84) Benannte Vertragsstaaten:
**DE ES FR GB IT**

(71) Anmelder: **Kleindienst GmbH**
**Argonstrasse 8**
**D-8900 Augsburg(DE)**

(72) Erfinder: **Fritsche, Walter**
**Schnitterstrasse 29**
**D-8901 Königsbrunn(DE)**

(74) Vertreter: **Ernicke, Hans-Dieter, Dipl.-Ing. et al**
**Patentanwälte Dipl.-Ing. H.-D. Ernicke**
**Dipl.-Ing. Klaus Ernicke Schwibbogenplatz**
**2b**
**D-8900 Augsburg(DE)**

(54) **Schleppvorrichtung für Fahrzeugräder in Autowaschanlagen.**

(57) Die Erfindung betrifft eine Schleppvorrichtung (1) für Fahrzeugräder in Autowaschanlagen mit einer Laufbahn (8) für die Räder, einem Zugmittel (3) in Form einer Kette (4) oder eines Seiles und mehreren in Abständen damit verbundenen quer gerichteten Schlepprollen (7). Am Zugmittel (3) sind mehrere Gleitsteine (10) in Abständen befestigt, die mit dem Zugmittel mitbewegt werden und dabei auf einer Schiene (9) längsbeweglich gelagert und geführt sind. Die Gleitsteine (10) bilden mit der jeweils zugeordneten Schlepprolle (7) einen U-förmigen Schleppschuh, der das Fahrzeugrad von hinten und zu beiden Seiten umfaßt und führt.

Fig.1

EP 0 358 932 A2

Schleppvorrichtung für Fahrzeugräder in Autowaschanlagen

Die Erfindung betrifft eine Schleppvorrichtung mit den Merkmalen im Oberbegriff des Hauptanspruchs.

Es ist bekannt, als Zugmittel zwei parallel laufende Ketten einzusetzen, zwischen denen in Abständen eine quergerichtete Schlepprolle angeordnet ist, die das Rad des zu waschenden Fahrzeuges hintergreift und schiebt. Die seitliche Führung des Rades übernehmen starr angeordnete Schienen.

Bei der bekannten Schleppvorrichtung kann es zum Ausbrechen des Fahrzeugrades aus der Schleppspur kommen, was regelmäßig Beschädigungen am Fahrzeug und der Waschanlage zur Folge hat. Schwierigkeiten bereiten auch Fahrzeuge mit Breitreifen, die nicht oder nur knapp in die Schleppspur passen.

Es ist daher Aufgabe der vorliegenden Erfindung, eine Schleppvorrichtung aufzuzeigen, mit der die Gefahr eines Ausbrechens gebannt ist und die Fahrzeugräder von beliebiger Breite befördern kann.

Die Erfindung löst diese Aufgabe mit den Merkmalen im Kennzeichenteil des Hauptanspruchs.

Bei der erfindungsgemäßen Schleppvorrichtung übernehmen die Gleitsteine die seitliche Führung beim Transport. Am mitbewegten Gleitstein kann das nach wie vor von der Schlepprolle geschobene Fahrzeugrad nicht mehr aufreiten und die Schleppspur verlassen. Außerdem werden Beschädigungen an seitlich vorstehenden Radteilen, insbesondere an modernen Alu-Felgen vermieden.

Fahrzeuge mit überbreiten Reifen sind für die erfindungsgemäße Schleppvorrichtung kein Problem mehr. Die Breitreifen werden von den Gleitsteinen untergriffen und aufgeladen. Wenn die Gleitsteine höher als das benachbarte Zugmittel oder dessen Abdeckung sind, können die Reifen beliebig breit sein und sogar seitlich über das Zugmittel vorstehen. Es ergeben sich auch besondere Vorteile hinsichtlich des Verschleisses. Die Radlast wird auf einem leicht zu wechselnden Bauteil abgestützt und nicht auf dem Zugmittel. Ferner kann beim Einfahren in die Waschanlage das Fahrzeugrad zwischen den aufeinanderfolgenden Gleitsteinen behinderungsfrei sowie ohne Kontakt mit bewegten Schleppvorrichtungsteilen auf der Lauffläche positioniert werden und wird erst von nächsten herannahenden Gleitstein aufgeladen. Hierdurch ergibt sich eine hohe Betriebs- und Unfallsicherheit.

Die erfindungsgemäße Schleppvorrichtung kann aus einem Zugmittel mit nur einem Strang und daran jeweils in Abständen angeordneten Schlepprollen und Gleitsteinen bestehen. In der bevorzugten Ausführungsform sind jedoch zwei Stränge vorgesehen, an denen die Gleitsteine beidseits der Laufbahn in gleicher Höhe befestigt sind.

Die Gleitsteine und die Schlepprolle können getrennt voneinander mit dem Zugmittel verbunden sein. Aus Gründen des Bauaufwands und der Stabilität empfiehlt es sich jedoch, die Teile miteinander zu einem U-förmigen Schleppschuh zu verbinden, wobei die Schlepprolle an den Gleitsteinen gelagert ist. Die Verbindung zum Zugmittel erfolgt vorzugsweise am vorderen Ende über einen drehbar gelagerten Bolzen.

Die erfindungsgemäße Schleppvorrichtung kann mit Zugmitteln beliebiger Art, beispielsweise Ketten, Bändern, Seilen oder dergleichen betrieben werden. Die Erfindung erlaubt es darüber hinaus, die Gleitsteine, vorzugsweise in Form der U-förmigen Schleppschuhe, lösbar am Zugmittel zu befestigen. Besonders geeignet ist hierfür ein Seil, das über Mitnehmer mit den Gleitsteinen im Schleppeingriff steht. Das Zugmittel kann damit kontinuierlich umlaufen, während die Gleitsteine nur bei Bedarf eingehängt und mitgenommen werden. Dies verringert einerseits den Verschleiß der bewegten Teile und verbessert andererseits die Unfallsicherheit für Personen, die bei Wartungsarbeiten, beim Verlassen des Fahrzeuges oder dergleichen anderen Gelegenheiten in die Schleppspur treten.

In den Unteransprüchen sind weitere vorteilhafte Ausgestaltungen der Gleitsteine angegeben.

Die Gleitsteine besitzen für die beschädigungsfreie Führung und Zentrierung der Fahrzeugräder am vorderen Ende eine Anschrägung sowie eine abgerundete Längskante.

Zur Erhöhung der Unfallsicherheit ist ein bodennaher Abweiser vor der Schlepprolle angeordnet und vorzugsweise seitlich an den Gleitsteinen befestigt. Dieser verhindert, daß ein Fuß unter die laufende Schlepprolle gezogen und eingequetscht werden kann.

Die Gleitsteine bestehen zur Bildung einer ausreichend großen Leit- oder Stützfläche aus mehreren Gliedern, die untereinander gelenkig verbunden sind und damit den Krümmungen des Zugmittels an den Umlenkpunkten folgen können.

Die Gleitsteine sind in Längsrichtung an einer Schiene geführt und stützen sich vorzugsweise auch auch auf dieser ab. Zusätzlich kann eine seitliche Führung an der Abdeckung des Zugmittels erfolgen. Im Rücklauf sind die Gleitsteine auf einer versenkten Gleitplatte oder einem anderen Leitorgan geführt.

Die erfindungsgemäße Schleppvorrichtung kann in neuerstellte Anlagen eingebaut, aber auch an bestehenden Waschanlagen nachgerüstet werden.

Die Erfindung ist in den Zeichnungen beispielsweise und schematisch dargestellt. Im einzelnen zeigen:

Fig. 1: eine perspektivische Ansicht einer Schleppvorrichtung,

Fig. 2: eine Stirnansicht gemäß Pfeil II der Schleppvorrichtung von Fig. 1,

Fig. 3 bis 5: perspektivische Detaildarstellungen eines Gleitsteins,

Fig. 6: eine Draufsicht auf eine Schleppvorrichtung mit unterschiedlichen Zuggliedern,

Fig. 7 und 8: Querschnitte durch die Schleppvorrichtung gemäß Schnittlinien VII und VIII/VIII von Fig. 6 und

Fig. 9: eine perspektivische Ansicht einer Schleppvorrichtung mit einem Seil als Zugmittel.

In den Zeichnungen sind Ausschnitte einer Schleppvorrichtung (1) für eine Autowaschanlage dargestellt, die aus einem endlos umlaufenden Zugmittel (3), mehreren Gleitsteinen (10) und Schlepprollen (7) besteht. Das Zugmittel (3) besitzt jeweils zwei Stränge, die beidseits der Laufbahn (8) für das Fahrzeugrad angeordnet sind. Gemäß den unterschiedlichen Ausführungsbeispielen kann das Zugmittel aus zwei Ketten (4) oder Seilen (5) bestehen, die auf geeignete Weise in Längsrichtung geführt sind.

Innerhalb und längs der Ketten (4) oder Seile (5) sind beidseits der Laufbahn (8) Führungsschienen (9) angeordnet, auf denen die Gleitsteine (10) längsbeweglich gelagert und geführt sind. Die Gleitsteine (10) sind im Querschnitt U-förmig ausgebildet. Sie umgreifen die Führungsschienen 9) und stützen sich auf ihnen und/oder der Laufbahn (8) ab. Die Lagerung kann über Rollen oder Gleitflächen erfolgen.

Die Gleitsteine (10) sind in Abständen am Zugmittel (3) befestigt, wobei sich die Gleitsteine eines Paares jeweils in Schlepprichtung (23) auf gleicher Höhe befinden. Die Gleitsteine umgeben und führen das Rad (2) seitlich, wobei sie sich mit diesem bewegen. Das Rad (2) wird hierbei durch die quergerichtete und drehbar gelagerte Schlepprolle (7) geschoben. Die Gleitsteine (10) sind in Schlepprichtung (23) vor der Schlepprolle (7) angeordnet. Sie bilden mit dieser von oben gesehen einen U-förmigen Schleppschuh (12).

In den gezeigten Ausführungsbeispielen ist die Schlepprolle (7) am hinteren Ende der Gleitsteine (10) drehbar gelagert (17). Die Gleitsteine (10) sind ihrerseits mit dem benachbarten Strang des Zugmittels (3) verbunden. Bei Verwendung einer Kette (4) geschieht dies über quergerichtete Bolzen (11), die drehbar an den Kettengliedern gelagert sind.

In Abwandlung kann auch jedes Teil (7,10) einzeln am Zugmittel (3) gelagert und getrennt in Schlepprichtung (23) geführt sein. Die Gleitsteine (10) können auch über zwei Lagerstellen mit dem Zugmittel (3) verbunden sein, beispielsweise über das Rollenlager (17).

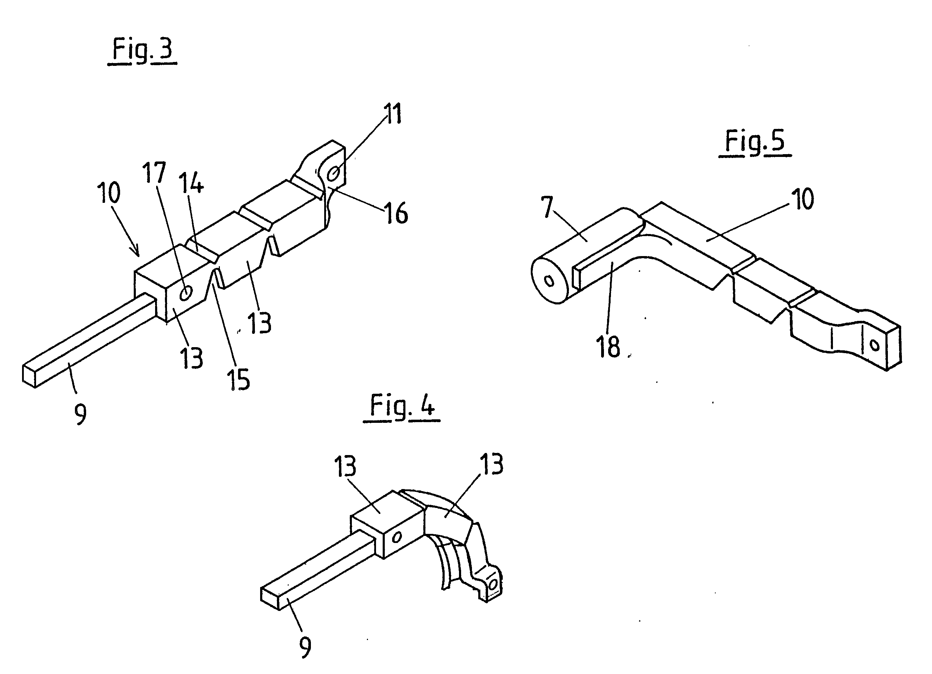

Die Gleitsteine (10) bestehen jeweils aus mehreren Gliedern (13), die in Schlepprichtung (23) hintereinander angeordnet und durch Gelenke (14) an der Oberseite verbunden sind. Die Gleitsteine (10) weisen dabei seitlich und oben eine glatte Oberfläche auf. An den Verbindungsstellen sind am unteren Seitenrand V-förmige Aussparungen (15) vorgesehen, so daß die Gleitstein (10) der Biegung des umlaufenden Zugmittels (3) an den Umlenkpunkten folgen können (vgl. Fig. 4).

Am vorderen Ende weisen die Gleitsteine (10) eine nach innen zur Laufbahn (8) geneigte Anschrägung (16) auf. Diese dient als Leitfläche, um das Rad (2) beim Anlaufen nach innen in die Schleppspur, d.h. in den Schleppschuh (12) zu zwingen. Am hinteren Ende ist in Bodennähe vor der Schlepprolle (7) ein quergerichteter, stabförmiger Abweiser (18) angeordnet, der beidseits an den Gleitsteinen (10) oder an der Schlepprolle (7) befestigt ist.

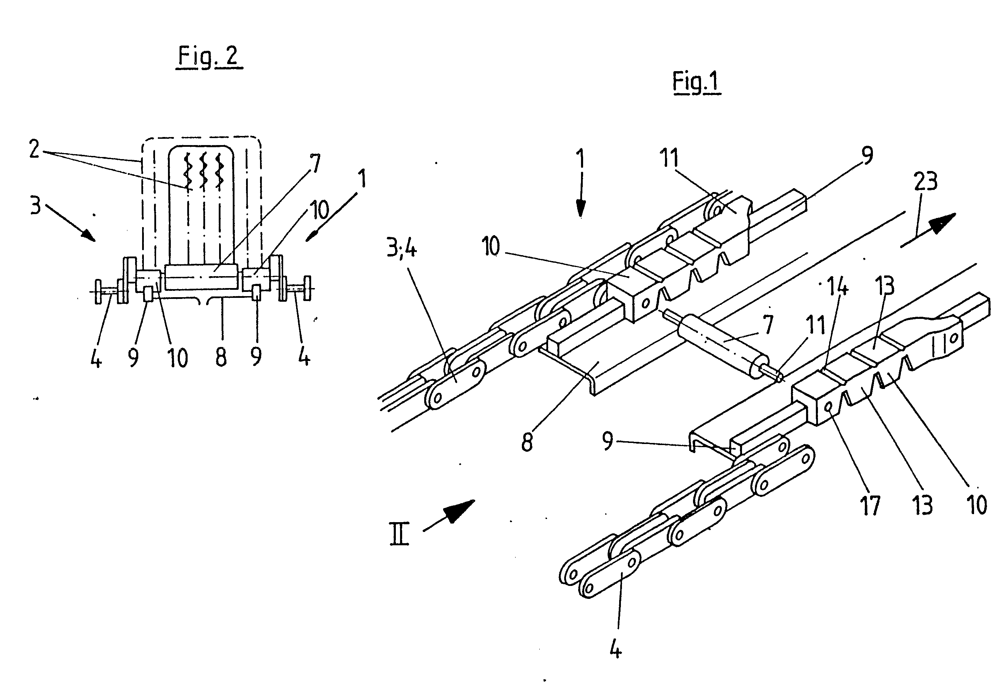

Wie Fig. 2 und 6 bis 8 verdeutlichen, umgeben die Gleitsteine (10) ein normal breites Fahrzeugrad (2) mit mehr oder weniger seitlichem Abstand. Sollte das geschleppte Rad aus der Spur geraten und schräg an einen Gleitstein (10) anlaufen, wird es an diesem wieder geradegerichtet. Da die Gleitsteine (10) mit dem Rad (2) mitbewegt werden, reitet es nicht auf. Um das Rad sicher führen zu können, besitzen die Gleitsteine (10) eine ausreichende Länge, vorzugsweise von mindestens 3/4 des maximal zu erwartenden Raddurchmessers. Zur Vermeidung von Beschädigung des anlaufenden Rades und als zusätzliche Sicherheit gegen Aufreiten ist die obere innenliegende Längskante der Gleitsteine (10) abgerundet (vgl. Fig. 7 und 8).

Wenn ein Fahrzeugrad (2) eine größere Breite als die freie Laufbahn zwischen den Gleitsteinen (10) aufweist oder mit einem starken seitlichen Versatz an der Eingangsseite der Autowaschanlage positioniert wird, wird es von einem oder beiden herannahenden Gleitsteinen (10) untergriffen, angehoben und aufgeladen. Fig. 2 zeigt diese Stellung, in der das Rad (2) auf beiden Gleitsteinen (10) ruht und von diesen abgeschützt und mitgeschleppt wird. Um ein Herabrollen nach hinten zu verhindern, steht die Schlepprolle (7) nach oben über die Gleitsteine (10) vor.

Im Ausführungsbeispiel in Fig. 2 besitzen die Gleitsteine (10) eine seitliche längsverlaufende Schulter, die die Aufstandsfläche des Rades (2) beschränkt. Das Zugmittel (3), hier zwei Ketten (4), verläuft ohne oder mit Abdeckung und kann in diesem Fall gleich hoch oder höher als die Radaufstandsfläche der Gleitsteine (10) sein.

Im Ausführungsbeispiel der Fig. 7 und 8 hingegen ragen die Gleitsteine (10) nach oben über das Zugmittel (3) hinaus. In diesem Fall kann ein Breitreifen auch seitlich über das Zugmittel (3) vorstehen, ohne dieses zu belasten. Das Zugmittel (3) kann außerdem mit einer Abdeckung (19) versehen sein, die das Zugmittel (3) seitlich und oben umgreift. Die Abdeckung (19) besitzt an der innenliegenden Längskante eine hakenförmige Abkantung (20), an der die Gleitsteine (10) zusätzlich seitlich geführt sind.

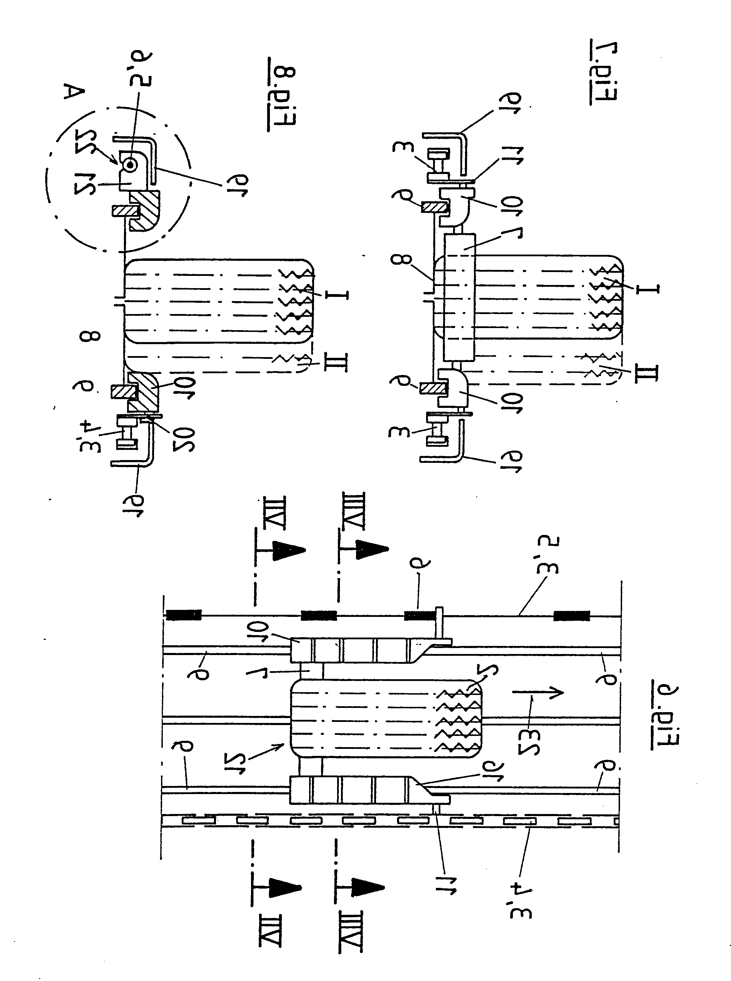

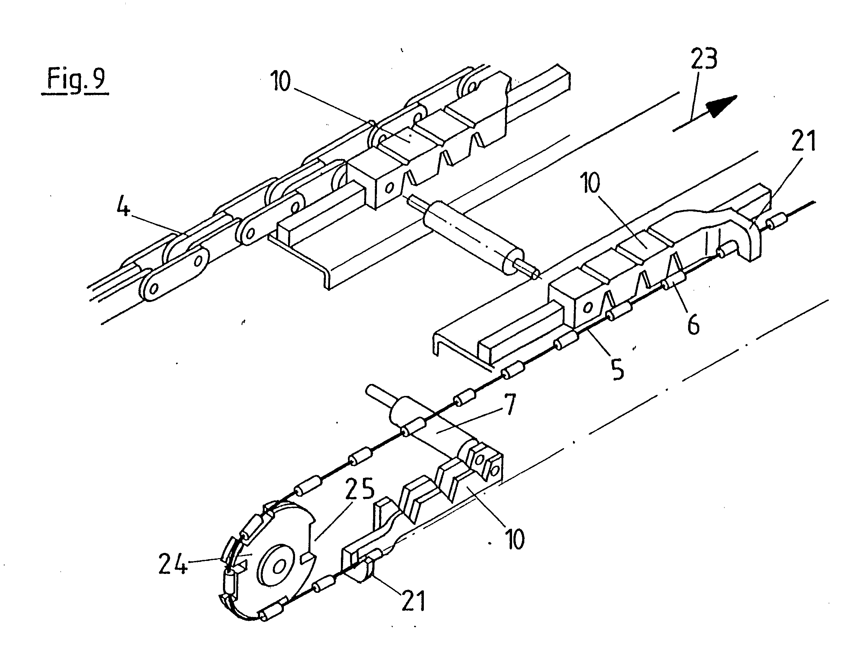

Das Ausführungsbeispiel der Fig. 6 und 9 zeigt ein Zugmittel (3) in Form eines Stahlseile (5) mit in Abständen angeordneten Mitnehmern (6). Üblicherweise bestehen beide Stränge aus einem Stahlseil. Die Mitnehmer (6) bestehen hier aus aufgepreßten Metallwalzen. Sie können auch anders ausgebildet sein, beispielsweise als Kugeln. Die Gleitsteine (10) sind an den Mitnehmern (6) lösbar befestigt und können bei Bedarf ein- und ausgehängt werden.

Sie besitzen hierzu einen am vorderen Ende seitlich vorstehenden Fanghaken (21), der mit dem schleppenden Mitnehmer (6) formschlüssig in Eingriff steht. Der Fanghaken (21) hat einen nach unten offenen Schlitz (22), der das Seil (5) übergreift, wobei der breitere Mitnehmer (6) an den Schlitzwänden formschlüssig geführt ist. Um eine Zentrierung und zusätzliche Seitenführung zu erreichen, sind der Mitnehmer (6) und die Schlitzwände stirnseitig mit zueinander passenden kegel- oder kugelartigen Ausformungen versehen.

Fig. 9 verdeutlicht die Schlepplage eines unterirdisch zurückkehrenden Gleitsteins (10). Dieser ist an seiner Radaufstandsfläche auf einer Gleitplatte (nicht dargestellt) geführt. Wenn diese Gleitplatte ein Stück niedriger liegt als das untere Seiltrum, können beide Teile (3,10) getrennt voneinander bewegt werden. Am Ende der Schleppbahn ergreift hierzu eine Abweisergabel den Gleitstein (10) bzw. den Schleppschuh (12) am Umlenkpunkt, löst ihm vom Zugmittel (3) und läßt ihn auf die tieferliegende Gleitfläche rutschen. Über geeignete Antriebsmittel werden die Gleitsteine (10) weiterbefördert und am anderen Ende über eine Klappe angehoben und in das umlaufende Zugmittel (3) wieder eingehängt. Fig. 9 zeigt diese Stellung.

Das Seil (5) wird samt dem gelenkigen Gleitstein (10) über eine schmale Umlenkrolle (4) bewegt. Diese besitzt zum formschlüssigen Eingriff mit den Mitnehmern (6) umfangsseitige Schleppnuten (25). Diese sind am vorderen Ende zusätzlich mit einer radialen Vertiefung versehen. Der Abstand der Gelenke (14) der Gleitsteine (10) ist auf den Durchmesser der Umlenkrolle (24) abgestimmt bzw. auf die Teilung einer Kette (4).

STÜCKLISTE

1 Schleppvorrichtung
2 Fahrzeugrad
3 Zugmittel
4 Kette
5 Seil
6 Mitnehmer
7 Schlepprolle
8 Laufbahn, Lauffläche
9 Führungsschiene
10 Gleitstein
11 Bolzen, Lager
12 Schleppschuh
13 Glied
14 Gelenk
15 Aussparung
16 Leitfläche, Anschrägung
17 Lager, Bohrung
18 Abweiser
19 Abdeckung
20 Abkantung, Stützfläche
21 Fanghaken
22 Öffnung, Schlitz
23 Schlepprichtung
24 Umlenkrolle
25 Schleppnut

## Ansprüche

1.) Schleppvorrichtung für Fahrzeugräder in Autowaschanlagen mit einer Laufbahn für die Räder, einem Zugmittel und mehreren, in Abständen damit verbundenen, quergerichteten Schlepprollen, dadurch **gekennzeichnet**, daß mit dem Zugmittel (3) mehrere Gleitsteine (10) in Abständen verbunden sind und mitbewegt werden, wobei die Gleitsteine (10) an der Seite der Laufbahn (8) und in Schlepprichtung (23) jeweils vor der benachbarten Schlepprolle (7) angeordnet sind.

2.) Schleppvorrichtung nach Anspruch 1, dadurch **gekennzeichnet**, daß die Gleitsteine (10) auf einer Führungsschiene (9) längsbeweglich gelagert und geführt sind.

3.) Schleppvorrichtung nach Anspruch 1 oder 2, dadurch **gekennzeichnet**, daß das Zugmittel (3) zwei parallel laufende Stränge mit beidseits der Laufbahn (8) auf gleicher Höhe angeordneten Gleitsteinen (10) aufweist.

4.) Schleppvorrichtung nach Anspruch 3, dadurch **gekennzeichnet**, daß die Gleitsteine (10) und die zugeordnete Schlepprolle (7) miteinander unter Bildung eines U-förmigen Schleppschuhs (12) verbunden sind.

5.) Schleppvorrichtung nach Anspruch 1 oder einem der folgenden, dadurch **gekennzeichnet**, daß das Zugmittel (3) als Seil (5) ausgebildet ist und Mitnehmer (6) für die Gleitsteine (10) aufweist.

6.) Schleppvorrichtung nach Anspruch 1 oder einem der folgenden, dadurch **gekennzeichnet**, daß die Gleitsteine (10) lösbar am Zugmittel (3) befestigt sind.

7.) Schleppvorrichtung nach Anspruch 1 oder einem der folgenden, dadurch **gekennzeichnet**, daß die Gleitsteine (10) mehrere in Schlepprichtung (23) hintereinander angeordnete und gelenkig (14) untereinander verbundene Glieder (13) aufweisen.

8.) Schleppvorrichtung nach Anspruch 1 oder einem der folgenden, dadurch **gekennzeichnet**, daß die Gleitsteine (10) nach oben über das Zugmittel (3) oder dessen Abdeckung (19) vorragen.

9.) Schleppvorrichtung nach Anspruch 1 oder 8, dadurch **gekennzeichnet**, daß die Gleitsteine (10) außenseitig an der Abdeckung (19) geführt sind.

10.) Schleppvorrichtung nach Anspruch 1 oder einem der folgenden, dadurch **gekennzeichnet**, daß die Gleitsteine (10) am vorderen Ende eine nach innen zur Laufbahn geeigte Anschrägung (16) aufweisen.

11.) Schleppvorrichtung nach Anspruch 1 oder einem der folgenden, dadurch **gekennzeichnet**, daß die Gleitsteine (10) an der innenliegenden oberen Längskante abgerundet sind.

12.) Schleppvorrichtung nach Anspruch 1 oder einem der folgenden, dadurch **gekennzeichnet**, daß in Bodennähe vor und längs der Schlepprolle (7) ein Abweiser (18) angeordnet ist.

13.) Schleppvorrichtung nach Anspruch 5 oder 6, dadurch **gekennzeichnet**, daß die Gleitsteine einen seitlich vorstehenden Fanghaken (21) aufweisen, der das Seil (5) übergreift und mit dem Mitnehmer (6) im Eingriff steht.

Fig. 2

Fig.1

Fig. 3

Fig. 4

Fig. 5

EP 0 358 932 A2

EP 0 358 932 A2

Fig. 8

Fig. 7

Fig. 6

Fig.9

10

23

4

21

10

6

5

7

25

24

10

10

21

EP 0 358 932 A2